# EUROPEAN PATENT APPLICATION

(11) **EP 2 130 466 A1**
(43) Date of publication of application: **09.12.2009**
(21) Application number: 09162128.4
(22) Date of filing: 05.06.2009
(51) Int. Cl.: A47J 31/46

(54) **Machine for the preparation of beverages**

(30) Priority: 06.06.2008 IT BO20080355
(71) Applicant: Macchiavelli S.r.l., San Lazzaro di Savena (BO) (IT)
(72) Inventor: Campari, Enrico Gianfranco, 40133 Bologna (IT); Fraboni, Beatrice, 40136 Bologna (IT); Torzo, Giacomo, 35137 Padova (IT); Negri, Luigi, 20099 Sesto San Giovanni (IT)
(74) Representative: Jorio, Paolo

(57) **Abstract**

The machine (1) comprises: a water tank (8); a first pipe (11), which draws from the tank (8); a pump (12), which is connected to the first pipe (11) and from which a pipe (13) originates; a heat exchanger (14), which is connected to the second pipe (13) and from which a first channel (15) originates, designed to convey the heated water to a chamber (16), where a pre-set amount of the infusion product is set; and a second channel (18), which originates from the chamber (16). The main characteristic of the present invention lies in the fact that the machine (1) comprises a Peltier-cell device (33), inside which a channel (34) is provided, which connects the second channel (18) hydraulically to a nozzle (35) and within which cooling of the beverage leaving the chamber (16) and that is flowing along the channel (34) is obtained.

## Description

The present invention relates to a machine for the preparation of beverages.

As is known, machines for the preparation of beverages derived from infusion products, such as, coffee, tea, or the like comprise a tray containing water, a heat exchanger, and a pump, designed to draw the water from the tray and to channel it through the heat exchanger towards a chamber, in which there is present either a cartridge of the infusion product or a pre-set amount of infusion product in powder form; said chamber being then provided with a nozzle, through which the liquid beverage comes out. At present, if the user desires a beverage at a temperature lower than that of delivery from the nozzle, he can only purchase packaged beverages (or in any case beverages already prepared) kept at the desired temperature, for example, via a refrigerator. It should, however, be pointed out that certain beverages are of high quality for the consumer if they are prepared hot and then cooled immediately after preparation hot.

The aim of the present invention is to provide a machine for the preparation of beverages derived from infusion products that will be free from the drawbacks referred to above and that in particular will be able to prepare a hot beverage or a cold beverage following a simple and fast procedure.

Provided according to the present invention is a machine for the preparation of beverages derived from infusion products of the type comprising:
a tank containing water;
a first pipe, which draws from said tank;
a pump, which is connected to said first pipe and from which a second pipe originates;
a heat exchanger, which is connected to said second pipe and
from which a first channel originates, designed to convey the heated water to a chamber, where a pre-set amount of said infusion product is set; and
a second channel, which originates from said chamber;
the machine being **characterized in that** it comprises a Peltier-cell device provided inside which is a channel, which connects said second channel hydraulically to a nozzle and within which the beverage leaving said chamber and flowing along said channel is cooled.

The ensuing example of embodiment is described purely by way of non-limiting illustration in order to enable a better understanding of the invention with the aid of the figures of the annexed drawings, wherein:
Figure 1 is a perspective view of a machine provided according to the teachings of the present invention; and
Figure 2 is a cross-sectional view of the machine of Figure 1.

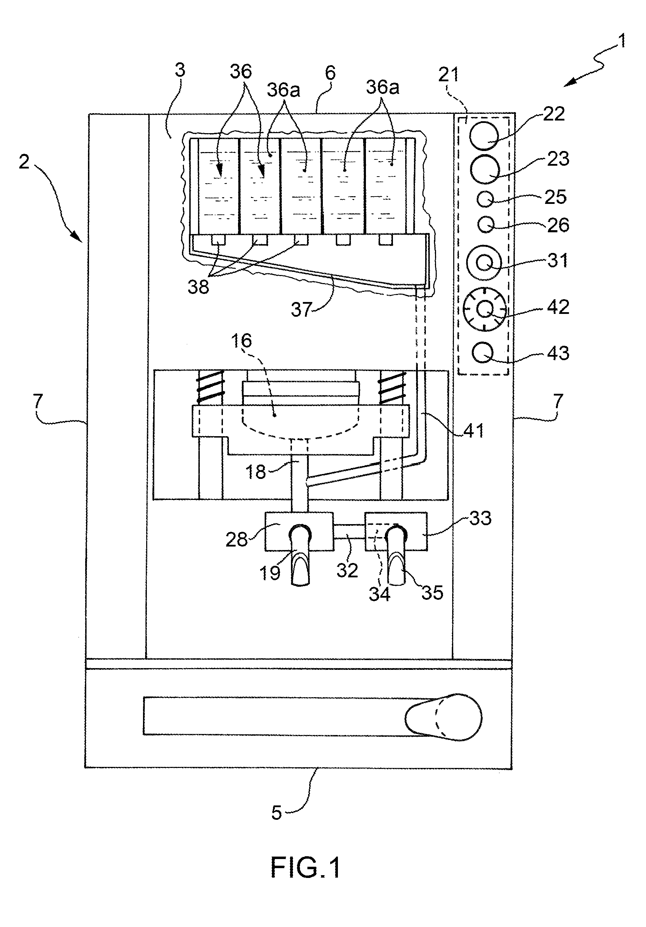

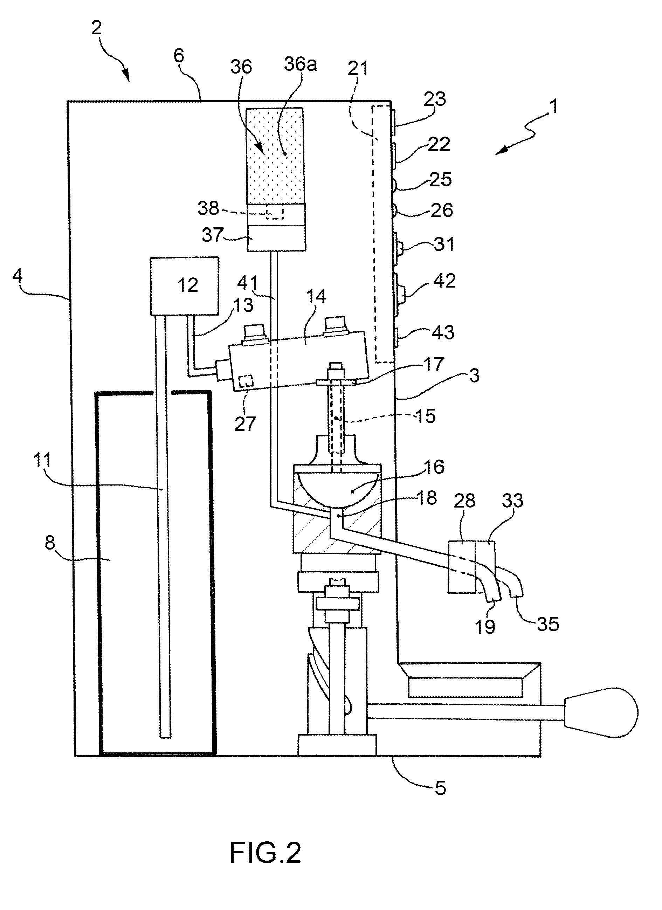

With reference to Figures 1 and 2, designated as a whole by 1 is a machine for the preparation of beverages derived from infusion products, such as coffee, tea, or the like. The machine 1 comprises a box structure 2 defined by a front wall 3, a rear wall 4, a base wall 5, a top wall 6, and two side walls 7.

The machine 1 comprises:
a tank 8, installed within the structure 2 and containing water;
a first pipe 11, which draws from the tank 8;
a pump 12, which is connected to the pipe 11 and from which a second pipe 13 originates;
a heat exchanger 14, which is connected to the second pipe 13 and from which a channel 15 originates, designed to convey the heated water to a chamber 16, where there is set in use a cartridge of the infusion product (not illustrated) or a layer of infusion product in powder form;
a frame 17, designed to support the aforesaid heat exchanger 14 at a given level; and
a channel 18, which originates from the aforesaid chamber 16 and terminates with a nozzle 19, from which the hot beverage is to come out.

The machine 1 moreover comprises an electronic control unit 21 (represented by a dashed line in Figure 1), designed to manage the various components. In particular, the control unit 21 is designed to control the pump 12 via a push-button 22, installed on the wall 3, and is designed to enable, via a push-button 23 installed on the wall 3, switching-on of the machine 1 and electrical supply of an electrical resistor 24 installed in the heat exchanger 14. Finally, the machine 1 comprises two warning lights 25 and 26, installed on the wall 3, the former being designed to signal switching-on of the machine 1 and supply of the electrical resistor 24, and the latter being designed to signal that the pre-set temperature in the heat exchanger 14, detected via at least one sensor 27, has been reached.

The main characteristic of the machine 1 lies in the fact that it comprises:
a valve 28, installed along the channel 18 and controlled via a knob 31 between one position, in which it makes the hydraulic communication between the chamber 16 and the nozzle 19, and one position, in which it makes the hydraulic communication between the chamber 16 and a pipe 32;
a Peltier-cell device 33, provided inside which is a channel 34 (represented by a dashed line), which connects the pipe 32 hydraulically to a second nozzle 35;
a series of containers 36, each of which containing an additive 36a to be mixed, preferably in powder form, such as, for example, sweeteners (normal sugar, cane sugar, honey, etc.) or flavouring (lemon in powder form, powdered milk, etc.);
a manifold 37, which is connected to the containers 36 via a respective delivery valve 38; and
a pipe 41, which is derived from the manifold 37 and fits into the channel 18 upstream of the valve 28.

The electronic control unit 21 is moreover designed to manage the device 33 and, via a selector 42, the type of the additive 36a. Furthermore, the control unit 21, via a push-button 43, can manage the device 33 and more precisely can determine the amount of heat to be subtracted from the hot beverage that traverses the channel 34 so as to determine the temperature of the cold beverage at outlet from the nozzle 35.

As is known, a Peltier cell is an object constituted by a plurality of pairs of semiconductor materials with p and n doping set in series. When an electric current is made to pass through a pair of semiconductor materials, one side of the cell cools down and the opposite side heats up. Of course, the channel 34 is provided at the side of the cell that cools down, and via the push-button 43 it is possible to regulate the intensity of the electric current and hence by how much the aforesaid side of the cell and hence the inside of the channel 34 cools down.

In use, once the machine 1 has been turned on and hence the electrical resistor 24 installed in the heat exchanger 14 is supplied, and once the cartridge of the infusion product has been inserted in the chamber 16, it is possible to select delivery of a hot beverage from the nozzle 19 or delivery of a cold beverage from the nozzle 35 and in this latter case select also the temperature of said cold beverage. At this point, a command is sent to the pump 12, which draws the water from the tank 8 and channels it into the chamber 16, from which the beverage is channelled towards the nozzle 19 or 35 selected.

In the case where it is desired to mix the beverage with an additive 36a, by acting on the selector 42 it is possible to determine which additive 36a and the amount thereof is to be mixed with the beverage.

From what has been described above, the numerous advantages achieved by the present invention emerge clearly.

In particular, a machine has been provided, whereby it is possible to select a hot or cold beverage and, in the case where the cold beverage is selected, this is first prepared with hot water so as to obtain a beverage of high quality and then is immediately cooled so as to obtain a cold beverage, which is also of high quality. This is the most innovative feature of the present patent application, which, we repeat, consists in preparing a beverage hot and then cooling it immediately whilst it is being channelled towards the nozzle 35. Furthermore, it is possible to regulate the temperature of the cold beverage and it is possible to mix the hot beverage with an additive, with an evident greater possibility of mixing, and said mixing occurs on line, namely, while the beverage is being channelled towards the nozzle 19 or 35 selected.

Finally, it is clear that modifications and variations may be made to the machine 1 described and illustrated herein, without thereby departing from the sphere of protection of the present invention.

In particular, the device 33 could be in parallel to the part of the channel 18 downstream of the valve 28, and the channel 34 could hence fit always into the channel 18 so that only one delivery nozzle 19 is necessary. Furthermore, the control unit 21, after each delivery of beverage through the device 33, could issue a command for a flow of water from the tank 8 along the channel 34 so as to clean the path followed by the cold beverage from any possible residue and hence safeguard the quality of the subsequent delivery. Finally, the channel 34 could comprise a chamber, in which the beverage to be cooled gathers until a given level is exceeded. In this way, a longer time is obtained during which the beverage is subjected to the cooling process.

## Claims

1. A machine for the preparation of beverages derived from infusion products of the type comprising:
a tank (8) containing water;
a first pipe (11), which draws from said tank (8);
a pump (12), which is connected to said first pipe (11) and from which a second pipe (13) originates;
a heat exchanger (14), which is connected to said second pipe (13) and from which a first channel (15) originates, designed to convey the heated water to a chamber (16), where a pre-set amount of said infusion product is set; and
a second channel (18), which originates from said chamber (16);
said machine being **characterized in that** it comprises a Peltier-cell device (33), provided inside which is a channel (34), which connects said second channel (18) hydraulically to a nozzle (35) and within which cooling of the beverage leaving said chamber (16) and flowing along said channel (34) is obtained.

2. The machine according to Claim 1, **characterized in that** it comprises:
a second nozzle (19), which is connected to said second channel (18) and from which the hot beverage is to come out;
a valve (28) installed along said second channel (18) designed, via selection means (21, 31), to provide the hydraulic communication between said chamber (16) and said second nozzle (19) or the hydraulic communication between said chamber (16) and said channel (34) of said device (33).

3. The machine according to Claim 1 and/or Claim 2, **characterized in that** it comprises means (21, 43) for regulating the temperature inside said channel (34).

4. The machine according to at least one of the preceding claims, **characterized in that** it comprises at least one container (36) containing an additive (36a) preferably in powder form and means (21, 38) for regulating the amount of said additive (36a) to be channelled in said second channel (18) whilst the hot beverage flows therein.

5. The machine according to Claim 4, **characterized in that** it comprises a plurality of said containers (36), each containing a corresponding said additive (36a) and selection means (42) for selecting the additive (36a) to be channelled in said second channel (18).

6. The machine according to any one of the preceding claims, **characterized in that** it comprises means (21) designed to issue a command, following upon the step of delivery of the cooled beverage, for a flow of water along said channel (34) so as to clean the latter from any possible residue.
